# EUROPEAN PATENT SPECIFICATION

(11) **EP 3 005 872 B1**
(45) Date of publication and mention of the grant of the patent: **15.03.2017**
(21) Application number: 13771546.2
(22) Date of filing: 05.06.2013
(51) Int. Cl.: A01N 43/16, C08B 37/00, C08B 37/06, A01P 15/00, A01P 21/00, A01N 59/16

(54) **PRODUCT FOR REGULATING PLANT HEALTH, METHOD FOR OBTAINING SAID PRODUCT AND USE THEREOF**
PRODUKT ZUR REGELUNG DER GESUNDHEIT VON PFLANZEN, VERFAHREN ZUR HERSTELLUNG DIESES PRODUKTS UND VERWENDUNG DAVON
PRODUIT PHYTOSANITAIRE, PROCÉDÉ PERMETTANT DE L'OBTENIR ET UTILISATION DE CELUI-CI

(43) Date of publication of application: 13.04.2016
(73) Proprietor: AHP Cropscience, S.L., 46520 Puerto de Sagunto (Valencia) (ES)
(72) Inventor: JUANES PERIS, José, Helenio, E-46520 Puerto de Sagunto (Valencia) (ES); JUANES PERIS, Luis, E-46520 Puerto de Sagunto (Valencia) (ES); RAMOS RUIZ, Roberto, E-46520 Puerto de Sagunto (Valencia) (ES); PARRA ÁLVAREZ, Margarita, E-46110 Godella (Valencia) (ES); GIL GRAU, Salvador, E-46989 Terramelar-Paterna (valencia) (ES)
(74) Representative: Carpintero Lopez, Francisco
(86) International application number: PCT/ES2013/070359
(87) International publication number: WO 2014/195525

(56) References cited:
- EP-A2- 2 123 161
- DE-T2- 69 808 262
- GB-A- 1 553 749
- US-A- 5 952 308
- DATABASE WPI Week 199331 Thomson Scientific, London, GB; AN 1993-247578 XP002720945, & JP H05 168490 A (FUSHIMI SEISAKUSHO KK) 2 July 1993 (1993-07-02)
- DATABASE WPI Week 201281 Thomson Scientific, London, GB; AN 2012-P96769 XP002720946, & CN 102 630 673 A (UNIV ZHEJIANG) 15 August 2012 (2012-08-15)
- SUMIN LEE ET AL: "Oligogalacturonic Acid and Chitosan Reduce Stomatal Aperture by Inducing the Evolution of Reactive Oxygen Species from Guard Cells of Tomato and Commelina communis 1", PLANT PHYSIOLOGY, vol. 121, 1 January 1999 (1999-01-01), pages 147-152, XP055104492,
- PAUL D BISHOP# ET AL: "Isolation and Characterization of the Proteinase Inhibitor-inducing Factor from Tomato Leaves IDENTITY AND ACTIVITY OF POLY-AND OLIGOGALACTURONIDE FRAGMENTS*", THE JOURNAL OF BIOLOGICAL CHEMISTRY, vol. 259, 10 November 1984 (1984-11-10), pages 13172-113177, XP055104507,
- CAMEJO D ET AL: "Oligogalacturonides stimulate antioxidant system in alfalfa roots", BIOLOGIA PLANTARUM, KLUWER ACADEMIC PUBLISHERS, DO, vol. 56, no. 3, 3 March 2012 (2012-03-03), pages 537-544, XP035045140, ISSN: 1573-8264, DOI: 10.1007/S10535-012-0107-1
- SUZUKI T ET AL: "Preparation and Isolation of Oligogalacturonic Acids and Their Biological Effects in Cockscomb (Celosia argentea L.) Seedlings", JOURNAL OF PLANT GROWTH REGULATION, SPRINGER-VERLAG, NE, vol. 21, no. 3, 1 September 2002 (2002-09-01), pages 209-215, XP019884540, ISSN: 1435-8107, DOI: 10.1007/S003440010060

## Description

### Field of the Invention

The invention relates to the field of the products for agricultural use. In particular, the invention relates to the use and preparation of a product for regulating plant health that is effective against both biotic and abiotic stress in plants and at the same time promotes a general enhancement in the crop vegetation and health.

### Background of the Invention

There is currently great concern for the sufficient availability of food for a constantly growing world population. The objective is clear: the agricultural production will have to be doubled by the year 2050 to meet the food needs of the world population.

The agrochemical industry has made great efforts to introduce new products on the market to control pests, diseases and weeds, but the level of competition of these biotic stress factors is still high, which limits crop amount and quality. The introduction on the market of a new synthetic phytosanitary product involves a long and extremely expensive process. The requirements concerning toxicological studies, eco-toxicological studies, environmental impact studies, residues studies, etc., limit companies' capacity to develop new active substances.

Besides the importance of the negative impact of biotic stress factors on agricultural production, from a global perspective the limiting role of factors causing abiotic stress is still much more important. Factors such as drought, salinity, acidity, low and high temperatures, water stress, UV radiations, heavy metals, etc., result in almost all the cultivated area being under sub-optimal conditions for plant growth, even in countries with developed agriculture.

The objective of global crop enhancement (CE) must be an important part of the Integrated Plant Health Management. In this sense, new phytosanitary products that are effective for controlling both biotic stress and abiotic stress have been proposed.

Organic copper-based products have recently been proposed as an alternative to inorganic copper-based products which have a huge environmental impact. An organic copper product has thus been described for controlling plant pathogens based on a combination of monomeric and polymeric copper complexes such as pectinates or polygalacturonates (ES 2231015 B1). Said product, however, has a low physicochemical stability which causes the formation of solids in suspension and therefore a lower agronomic effectiveness thereof. There are also products containing copper heptagluconate (Hydromix, Alibio Biomix, Dabquel mix, etc.) of a synthetic origin on the market, therefore in their synthesis process they incorporate inert matter that latter passes on to the final formulation thereof.

On the other hand, document ES 2303809B2 describes a composition containing a mixture of copper monogluconate and copper monogalacturonate as an active ingredient. Even though said composition is more effective against the plant pathogens and is more innocuous than the former, it contains copper ions that can precipitate in the presence of gluconates and galacturonates, so the amount of soluble copper, and therefore its actual efficacy, is reduced.

On the other hand, various plant strengthening compounds for increasing crop vigor and health such that they have more balanced growth, develop and produce better, and further enhance their defenses for controlling pests and diseases are known in the state of the art. These plant strengthening compounds, or biostimulants, are usually of a natural origin obtained either from pathogens or from plant material, such as amino acids, glycosides, proteins, seaweed extracts, etc. Thus, for example, seaweed extracts have been used to promote mandarin and orange growth (Fornes et al., 2002, "Effect of a seaweed extract on the productivity of 'de Nules' clementine mandarin and Navelina orange", Botanica Marina 45:486-489) or pepper growth (Arthur et al., 2003, "Effect of a seaweed concentrate on the growth and yield of three varieties of Capsicum annum, South African Journal of Botany 69, 207-211).

The present inventors have discovered a plant protection composition based on low molecular weight oligogalacturonates esterified with soluble salts of transition metals selected from Zn, Mn, Fe, Mo and Co, that does not include copper and induces and stimulates defense mechanisms in plants against damage caused by pathogens (biotic stress) and by various adverse factors causing abiotic stress. This composition further increases treated plant vigor and health.

Different compositions comprising mixture of galacturonic acid oligomers have been described in the state of the art DE 698 08 262 T2 JPH05168490; CN102630673; SUMIN LEE ET AL (Plant Physiology, 21, 147-152 (1999)) "Oligogalactoronic Acid and Chitosan reduce stomatal aperture by inducing the evolution of reactive osygen species from guard cells of tomato and Commelina communis 1"; PAUL D BISHOP ET AL: (J. Biol. Chemistry, 259, 13172-13177 (1984)) "Isolation and characterization of the proteinase inhibitor-inducing factor from tomato leaves. Identity and activity of poly-and oligogalacturonide fragments"; CAMEJO D ET AL: (Biologia Plantarum, 56, 537-544 (2012)) *"Oligogalactornides stimulate antioxidant system in alfalfa roots')* but none of them cites or suggests these galacturonic acid oligomers being esterified with a transition metal.

US5952308 describes edible compositions comprising a food product and a mineral absorption promoting agent comprising oligogalacturonic acid, optionally containing a mineral. GB 1 553 749 discloses pharmaceutical compositions based on polygalacturonic acid complexes and a metallic cation to improve and increase essential elements absorption. Both documents refers to compositions intended for human use, but prior to this invention, there was not any hint in the state of the art suggesting the successful use of these compositions as agrochemicals.

In this context, the composition as used in the invention must be considered a product that regulates plant health, its contribution therefore being fundamental in achieving the objectives of the so-called "Second Green Revolution", which seeks to double food production from now to the year 2050.

### Object of the Invention

Therefore, the object of the present invention is to provide a composition for agricultural use comprising an active ingredient consisting of a mixture of galacturonic acid oligomers, wherein the number of galacturonic acid units ranges between 1 and 10.

Another object of the present invention is to provide a method for the preparation of said composition.

Another object of the present invention is also to provide a method for inducing a response to biotic stress and/or for inducing a response to abiotic stress in plants fit to be cultivated, as well as for inducing and stimulating the self-defenses thereof and/or for increasing their vigor and health, which comprises applying said composition to plants fit to be cultivated.

### Description of the Drawings

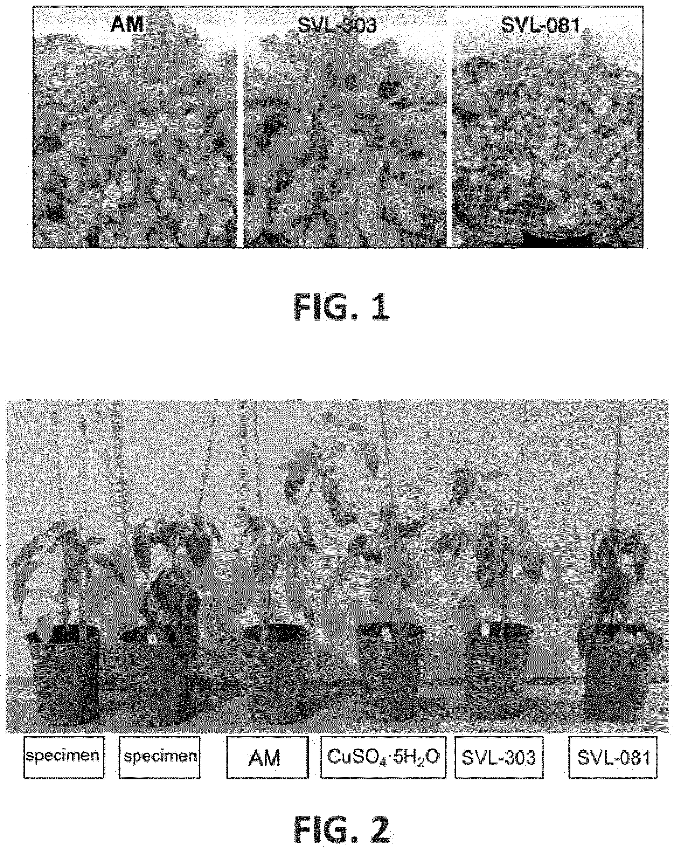

Figure 1 shows the appearance of 6 week old *Arabidopsis thaliana* plants subjected to water stress and treated every for 15 days after 15 days of age with a composition of galacturonic acid oligomers of the invention (AM), a composition of galacturonic acid oligomers of the invention esterified with Zn/Mn (SVL-303) and a comparative composition of galacturonic acid oligomers esterified with Cu (SVL-081).
Figure 2 shows the appearance of the leaves of 4.5 month old pepper plants subjected to water stress 13 days after treatment with a composition of galacturonic acid oligomers of the invention (AM), a composition of copper sulfate pentahydrate (applied in doses supplying the same Cu as SVL-081), a composition of galacturonic acid oligomers of the invention esterified with Zn/Mn (SVL-303) and a comparative composition of galacturonic acid oligomers esterified with Cu (SVL-081).

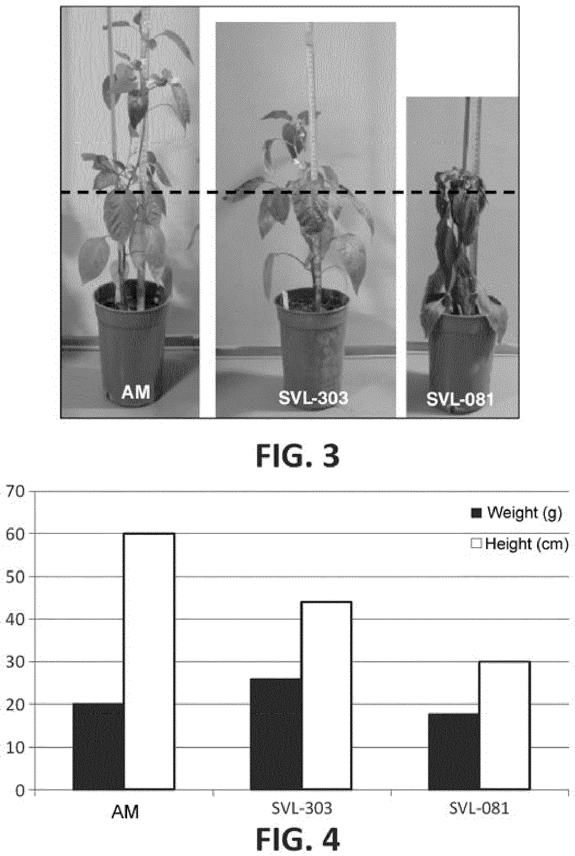

Figure 3 shows the appearance of the leaves of 4.5 month old pepper plants subjected to water stress and treated every 15 days after 21 days of age with a composition of galacturonic acid oligomers of the invention (AM), a composition of galacturonic acid oligomers of the invention esterified with Zn/Mn (SVL-303) and a comparative composition of galacturonic acid oligomers esterified with Cu (SVL-081).
Figure 4 shows the weight and height of 4.5 month old pepper plants subjected to water stress and treated every 15 days after 21 days of age with a composition of galacturonic acid oligomers of the invention (AM), a composition of galacturonic acid oligomers of the invention esterified with Zn/Mn (SVL-303) and a comparative composition of galacturonic acid oligomers esterified with Cu (SVL-081). N=1.

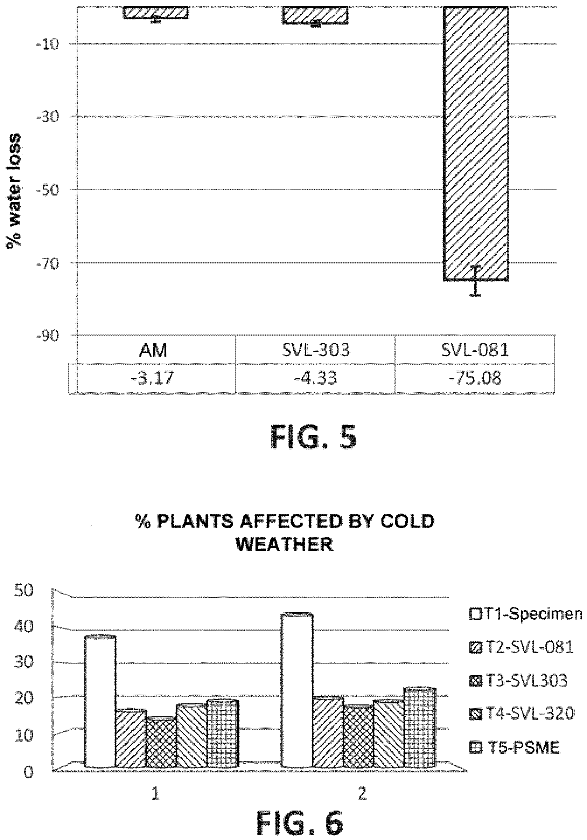

Figure 5 shows the percentage of water loss in leaves of 4.5 month old pepper plants subjected to water stress and treated every 15 days after 21 days of age with a composition of galacturonic acid oligomers of the invention (AM), a composition of galacturonic acid oligomers of the invention esterified with Zn/Mn (SVL-303) and a comparative composition of galacturonic acid oligomers esterified with Cu (SVL-081). N=10.
Figure 6 shows the mean percentage of tomato plants affected by cold weather in untreated plants (T1) and in plants subjected to treatment with a comparative composition of galacturonic acid oligomers esterified with Cu (T2-SVL-081), with a composition of galacturonic acid oligomers of the invention esterified with Zn/Mn (T3-SVL-303), with a composition of galacturonic acid oligomers of the invention esterified with Fe (T4-SVL-320), and with a product that induces defenses against stress of the state of the art (T5).

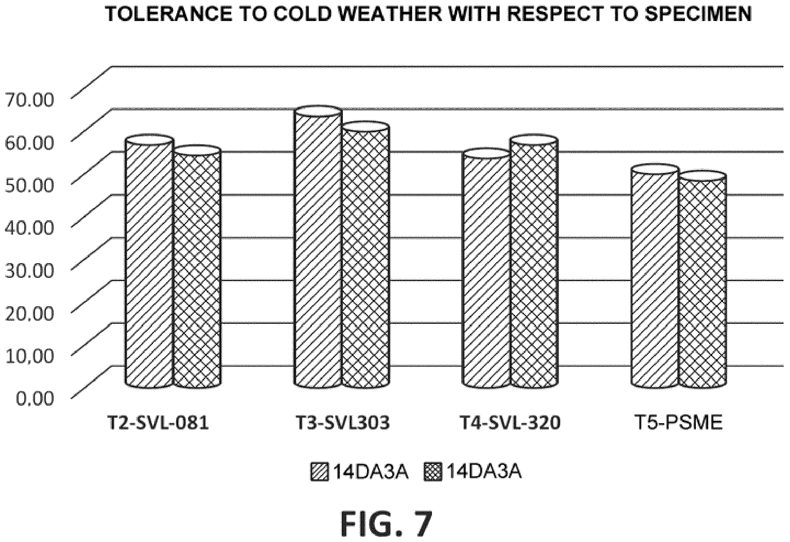

Figure 7 shows the mean percentage of tomato plants affected by cold weather with respect to the specimen subjected to treatment with a comparative composition of galacturonic acid oligomers esterified with Cu (T2-SVL-081), with a composition of galacturonic acid oligomers of the invention esterified with Zn/Mn (T3-SVL-303), with a composition of galacturonic acid oligomers of the invention esterified with Fe (T4-SVL-320), and with a product that induces defenses against stress of the state of the art (T5).

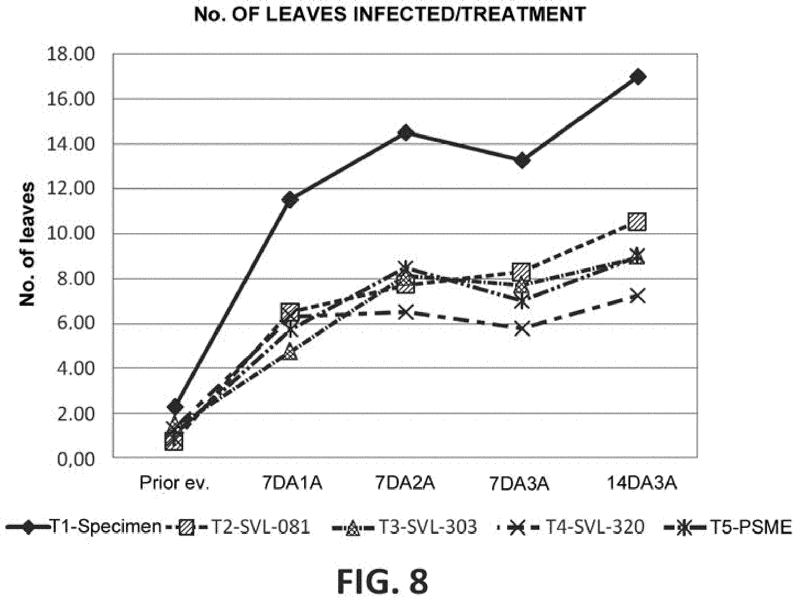

Figure 8 shows the mean number of leaves infected with *Phytophthora infestans* in untreated tomato plants (T1) and in tomato plants subjected to treatment with a comparative composition of galacturonic acid oligomers esterified with Cu (T2-SVL-081), with a composition of galacturonic acid oligomers of the invention esterified with Zn/Mn (T3-SVL-303), with a composition of galacturonic acid oligomers of the invention esterified with Fe (T4-SVL-320), and with a product that induces defenses against stress of the state of the art (T5).

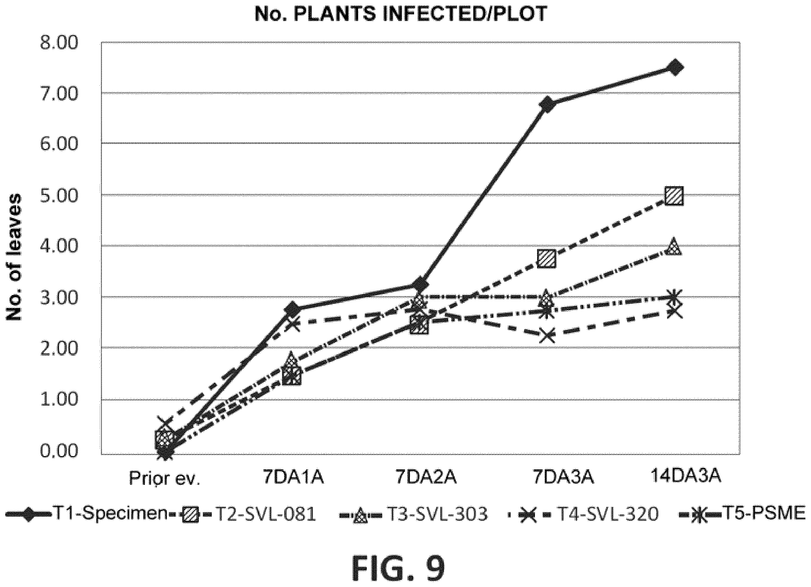

Figure 9 shows the mean number of plants infected with *Phytophthora infestans* in untreated tomato plants (T1) and in tomato plants subjected to treatment with a comparative composition of galacturonic acid oligomers esterified with Cu (T2-SVL-081), with a composition of galacturonic acid oligomers of the invention esterified with Zn/Mn (T3-SVL-303), with a composition of galacturonic acid oligomers of the invention esterified with Fe (T4-SVL-320), and with a product that induces defenses against stress of the state of the art (T5).

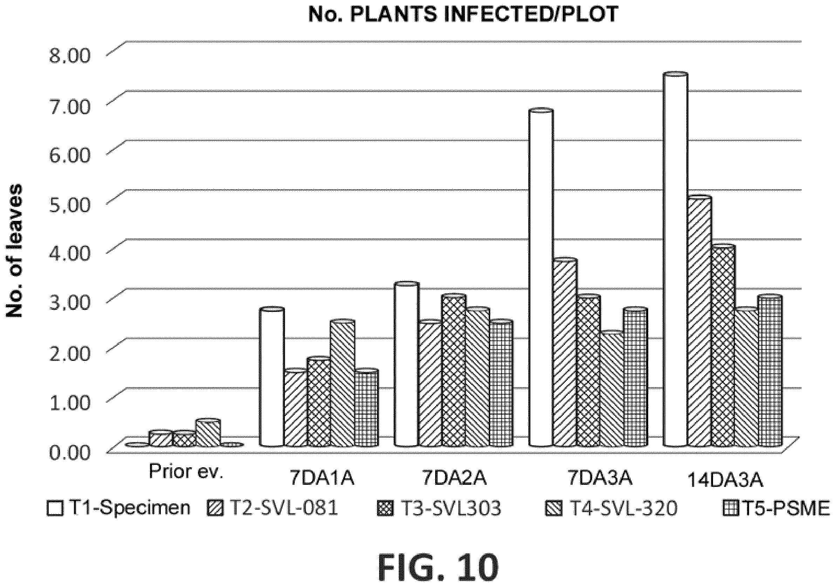

Figure 10 shows the mean number of plants infected with *Phytophthora infestans* in untreated tomato plants (T1) and in tomato plants subjected to treatment with a comparative composition of galacturonic acid oligomers esterified with Cu (T2-SVL-081), with a composition of galacturonic acid oligomers of the invention esterified with Zn/Mn (T3-SVL-303), with a composition of galacturonic acid oligomers of the invention esterified with Fe (T4-SVL-320), and with a product that induces defenses against stress of the state of the art (T5).

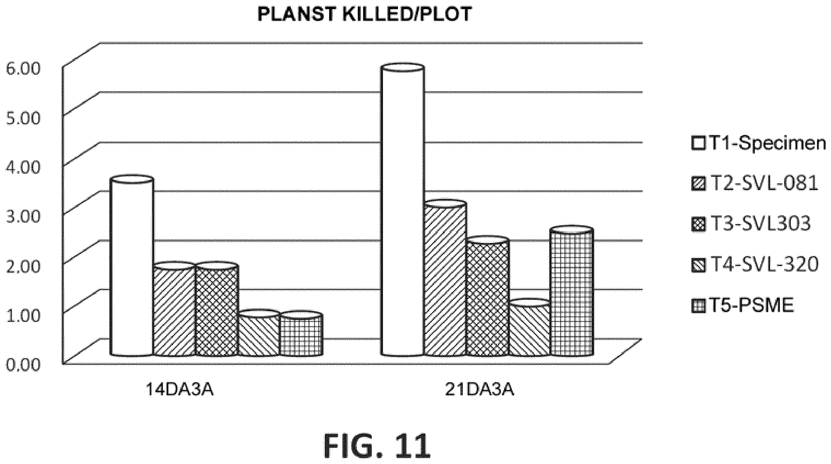

Figure 11 shows the mean number of plants killed by *Phytophthora infestans* in untreated tomato plants (T1) and in tomato plants subjected to treatment with a comparative composition of galacturonic acid oligomers esterified with Cu (T2-SVL-081), with a composition of galacturonic acid oligomers of the invention esterified with Zn/Mn (T3-SVL-303), with a composition of galacturonic acid oligomers of the invention esterified with Fe (T4-SVL-320), and with a product that induces defenses against stress of the state of the art (T5).

### Detailed Description of the Invention

The present invention provides a composition for agricultural use, hereinafter "composition as used in the invention", comprising an active ingredient consisting of a mixture of galacturonic acid oligomers, wherein the number of galacturonic acid units ranges between 1 and 10.

In the context of the invention, the term "mixture of galacturonic acid oligomers, wherein the number of galacturonic acid units ranges between 1 and 10" relates to a mixture formed by some or all of the following: monomers, dimers, trimers, tetramers, etc., up to decamers, of galacturonic acid.

In a particular embodiment of the composition as used in the invention, the active ingredient consists of a mixture of galacturonic acid oligomers, wherein the number of galacturonic acid units ranges between 1 and 8. In another particular embodiment of the composition as used in the invention, the active ingredient consists of a mixture of galacturonic acid oligomers, wherein the number of galacturonic acid units ranges between 4 and 8. In a preferred embodiment of the composition of the invention, the active ingredient consists of a mixture of galacturonic acid oligomers wherein the number of galacturonic acid molecules ranges between 1 and 4.

In another particular embodiment, the composition as used in the invention comprises 0.1-10% by weight of active ingredient with respect to the total weight of the composition. In a preferred embodiment, the composition comprises 0.5-5% by weight of active ingredient with respect to the total weight of the composition. In an even more preferred embodiment, the composition comprise 2% by weight of active ingredient with respect to the total weight of the composition.

In another particular embodiment of the composition as used in the invention, the active ingredient consists of a mixture of galacturonic acid oligomers esterified with a transition metal selected from Zn, Mn, Fe, Mo, Co and mixtures thereof, wherein the number of galacturonic acid molecules ranges between 1 and 10. In a preferred embodiment, the active ingredient consists of a mixture of galacturonic acid oligomers esterified with a transition metal selected from Zn, Mn, Fe and mixtures thereof, wherein the number of galacturonic acid molecules ranges between 1 and 10. In an even more preferred embodiment, the active ingredient consists of a mixture of galacturonic acid oligomers esterified with a transition metal selected from Fe and a mixture of Zn and Mn, wherein the number of galacturonic acid molecules ranges between 1 and 10.

These metals were selected because of their physiological activating character. The role of these metals as physiological activators is widely recognized and described in the literature. Furthermore, unlike the copper that was previously used, their phytotoxic effects at the concentrations proposed for use are virtually nil because the tolerance ranges of most cultivated plants with respect to same are much greater than those of copper.

In another particular embodiment of the composition as used in the invention, the active ingredient consists of a mixture of galacturonic acid oligomers esterified with a transition metal selected from Zn, Mn, Fe, Mo, Co and mixtures thereof, wherein the number of galacturonic acid molecules ranges between 1 and 4. In another particular embodiment of the composition the active ingredient consists of a mixture of galacturonic acid oligomers esterified with a transition metal selected from Zn, Mn, Fe, Mo, Co and mixtures thereof, wherein the number of galacturonic acid molecules ranges between 4 and 10. In another particular embodiment of the composition the active ingredient consists of a mixture of galacturonic acid oligomers esterified with a transition metal selected from Zn, Mn, Fe, Mo, Co and mixtures thereof, wherein the number of galacturonic acid molecules ranges between 4 and 8.

In a preferred embodiment of the composition as used in the invention, the active ingredient consists of a mixture of galacturonic acid oligomers esterified with a transition metal selected from Zn, Mn, Fe and mixtures thereof, wherein the number of galacturonic acid molecules ranges between 1 and 4. In another preferred embodiment of the composition the active ingredient consists of a mixture of galacturonic acid oligomers esterified with a transition metal selected from Zn, Mn, Fe and mixtures thereof, wherein the number of galacturonic acid molecules ranges between 4 and 10. In another preferred embodiment of the composition the active ingredient consists of a mixture of galacturonic acid oligomers esterified with a transition metal selected from Zn, Mn, Fe and mixtures thereof, wherein the number of galacturonic acid molecules ranges between 4 and 8.

In an even more preferred embodiment of the composition as used in the invention, the active ingredient consists of a mixture of galacturonic acid oligomers esterified with a transition metal selected from Fe and a mixture of Zn and Mn, wherein the number of galacturonic acid molecules ranges between 1 and 4. In another even more preferred embodiment of the composition the active ingredient consists of a mixture of galacturonic acid oligomers esterified with a transition metal selected from Fe and a mixture of Zn and Mn, wherein the number of galacturonic acid molecules ranges between 4 and 10. In another even more preferred embodiment of the composition the active ingredient consists of a mixture of galacturonic acid oligomers esterified with a transition metal selected from Fe and a mixture of Zn and Mn, wherein the number of galacturonic acid molecules ranges between 4 and 8.

In another particular embodiment, the composition as used in the invention comprises 0.1-20% by weight of metal with respect to the total weight of the composition. In a preferred embodiment, the composition comprises 1-10% by weight of metal with respect to the total weight of the composition. In an even more preferred embodiment, the composition comprise 2-8% by weight of metal with respect to the total weight of the composition. Thus, for example, in the case of using Fe as a transition metal, the composition will preferably comprise 2-5% by weight of this metal, preferably 3.5%. Likewise, in the case of using mixtures of Mn and Zn, the composition will preferably comprise 2-6% by weight of each of these metals, preferably 3%.

In addition to the previously described active ingredient, the composition as used in the invention can contain other components or additives facilitating its formulation for subsequent application. Therefore in another particular embodiment of the composition the composition comprises one or more additives known by the person skilled in the art such as complexing agents and stabilizers, for example. Therefore, any compound with stabilizing properties of the state of the art such as EDTA, urea or maltodextrin, for example, can be used as a stabilizer. Likewise, any compound with complexing properties of the state of the art such as a gluconate, for example, preferably sodium gluconate, can be used as a complexing agent. The gluconate used in the composition of the invention is a commercially available gluconate that is virtually pure in the order of a 99% purity which, unlike earlier patents ES 2231015 B1 and ES 2303809 B2, is not obtained simultaneously with galacturonates from pectins, but rather it is subsequently added to the composition as an additive to enhance solubility and stability thereof.

In a particular embodiment, the composition as used in the invention comprises 18-22% by weight of gluconate with respect to the total weight of the composition. In a preferred embodiment, the composition comprises 20% by weight of gluconate with respect to the total weight of the composition. In another particular embodiment, the composition comprises 0.5-10% by weight of EDTA with respect to the total weight of the composition. In another particular embodiment, the composition comprises 1-20% by weight of urea with respect to the total weight of the composition. In another particular embodiment, the composition comprises 0.5-10% by weight of maltodextrin with respect to the total weight of the composition. In a preferred embodiment, the composition comprises a 4% by weight of EDTA with respect to the total weight of the composition. In a preferred embodiment, the composition comprises 10% by weight of urea with respect to the total weight of the composition. In a preferred embodiment, the composition comprises 2% by weight of maltodextrin with respect to the total weight of the composition.

In another aspect, the invention provides a method for the preparation of the composition of the invention described above, hereinafter "method of the invention", comprising the steps of:
(a) dissolving 10-25% by weight of pectin with respect to the total weight of the final composition in a lower alcohol at a temperature of 55-70°C and adding 1-5% by volume of a strong acid with respect to the total volume of the final composition;
(b) filtering the solution obtained in step (a) to separate a liquid fraction and a solid residue; and
(c) subjecting the liquid fraction obtained in step (b) to fractional distillation to obtain a solution of galacturonic acid oligomers wherein the number of galacturonic acid units ranges between 1 and 10, and
(d) adding a soluble salt of the transition metal selected from Zn, Mn, Fe, Mo, Co and mixtures thereof to the solution obtained in step (c).

The pectin of step (a) is a food pectin from fruits (fundamentally apple, peach and citrus fruits) which is dissolved in a lower alcohol. In the context of the invention, the term "lower alcohol" refers to an alcohol with 1 to 4 carbon atoms, such as methanol, ethanol or isopropyl alcohol, for example; preferably methanol.

Said solution is prepared at a suitable temperature in the order of 55-70°C and under stirring in a closed stirring reactor or in another suitable device of the state of the art. Next 1-5% by volume of a strong acid with respect to the total volume of the final composition is added. Said strong acid can be hydrochloric acid, phosphoric acid or sulfuric acid, preferably hydrochloric acid. Stirring is then maintained the time that is necessary for the complete reaction to occur, which will be in the order of 24 hours. The described conditions of high temperature, low pH and prolonged stirring time lead to an almost complete hydrolysis of the pectin polymers, yielding low molecular weight galacturonic acid oligomers with 1 to 10 galacturonic acid units.

By performing this reaction in the presence of methanol as a lower alcohol, , for example, the galacturonic acid is methylated, unlike in classic synthesis where acid hydrolysis is performed (Singthong et al., Food Hydrocolloids 19 (5): 793-801). This difference could give rise to the activity of the composition of the invention, although the invention does not seek to adhere to one theory in particular. Furthermore, since the alcohol blocks the reducing end of the galacturonic acid molecules, the metal reducing potential thereof decreases, which is clearly advantageous in the case of esterifying the galacturonic acid oligomers of the composition of the invention with a transition metal.

In a preferred embodiment of the method of the invention, in step (a) 14% by weight of pectin with respect to the total weight of the final composition is dissolved in methanol at a temperature of 65°C, and 1.9% by volume of hydrochloric acid with respect to the total volume of the final composition is added.

The filtration in step (b) can be performed according to any suitable method of the state of the art. Similarly, the fractional distillation of step (c) can be performed according to any suitable method of the state of the art to be determined by a person skilled in the art.

In a particular embodiment of the method of the invention, the method comprises an additional step in which the solution obtained in step (c) is heated to dryness to obtain an oligogalacturonate powder. In another particular embodiment of the method of the invention, the method comprises another additional step in which a soluble salt of the transition metal selected from Zn, Mn, Fe, Mo, Co and mixtures thereof is added to an aqueous solution of the previously obtained oligogalacturonate powder to obtain a solution of galacturonic acid oligomers esterified with said transition metal. In a preferred embodiment, the transition metal is selected from Zn, Mn, Fe and mixtures thereof. In an even more preferred embodiment, the transition metal is selected from Fe and a mixture of Zn and Mn. Any salt that the person skilled in the art considers suitable can be used as a soluble salt of the selected transition metal. In a particular embodiment of the method of the invention, the soluble salt of the transition metal is a sulfate, an acetate, a chloride, a carbonate or an oxide.

In the method of the invention, the method comprises an additional step (d) in which a soluble salt of the transition metal selected from Zn, Mn, Fe, Mo, Co and mixtures thereof is added to the solution obtained in step (c) to obtain a solution of galacturonic acid oligomers esterified with said transition metal. In a preferred embodiment, the transition metal is selected from Zn, Mn, Fe and mixtures thereof. In an even more preferred embodiment, the transition metal is selected from Fe and a mixture of Zn and Mn. Any salt that the person skilled in the art considers suitable can be used as a soluble salt of the selected transition metal. In a particular embodiment of the method of the invention, the soluble salt of the transition metal is a sulfate, an acetate, a chloride, a carbonate or an oxide.

In another particular embodiment of the method of the invention, the method comprises a subsequent step in which additives are added to the resulting solution of galacturonic acid oligomers esterified with a transition metal selected from Zn, Mn, Fe, Mo, Co and mixtures thereof, obtained according to one of the two preceding paragraphs.

As previously mentioned, said additives can be stabilizers or complexing agents such as EDTA, urea, maltodextrin or gluconate, for example. Therefore in a preferred embodiment of the method of the invention, the selected additive is a gluconate, preferably sodium gluconate.

When the added additive is a gluconate, the ions of the selected transition metals are reduced to a lesser degree by the composition of galacturonates of the invention, as previously mentioned, unlike the copper ions used in the other patents belonging to the same authors which precipitate in a larger proportion as metallic copper, thus reducing the effective amount of metal available in solution and generating residue problems.

The composition as used in the invention thus obtained will be applied by fertigation or by foliar spraying at suitable doses according to the crops, vegetative periods and other non-specified circumstances, thereby achieving systemic action of the active ingredient.

In foliar spraying, the necessary dose of the composition is dissolved in a sufficient amount of water to facilitate uniform distribution of the product on the crop. Correct calibration of the equipment used for the application must be assured.

The usual standards applied in fertigation treatments will be followed in the application through the irrigation system.

As indicated, the composition can be used by means of applying it on the leaves of plants or through irrigation because its effect is shown equally by means of acquired chemical resistance mechanisms and systemic and natural defense processes of the plant. This means that it is not necessary to completely cover the tree in foliar application, thereby simplifying the farmer's job. Indeed, given that its mechanism of action moves through the plant and that the product itself is systemic, a massive application such as that used for conventional copper products to obtain a suitable result is not necessary. Furthermore, the possibility of being used in irrigation in addition to the obvious application comfort introduces a higher safety variable because it has no impact whatsoever on useful fauna. As the number of conducted tests show, adverse effects have not been observed on useful arthropods. The risk for non-target organisms is considered insignificant. In the same manner, due to its specific mode of action, the potential to create resistances is extremely low. In contrast, the composition of the invention could be part of a treatment plan to limit the occurrence of resistances to specific fungicides.

In the same sense, the composition as used in the invention shows no risks of residue accumulation in the crop or in the products derived therefrom (oils, wines...).

The composition shows no risks of phytotoxicity nor is it toxic for those who apply it. Given the characteristics of the formulation, the composition has a very favorable toxicological profile, which is a clear advantage with respect to most formulations used as fungicides, particularly with respect to copper-based products.

On the other hand, the composition as used in the invention is effective for preventing damage caused by biotic stress factors such as pathogens in that it acts on the plant such that it induces defense mechanisms therein against the pathogen. Said composition also shows excellent efficacy for preventing damage caused by a number of adverse factors causing abiotic stress in plants. It also activates mechanisms that cause vegetative development, therefore promoting a general enhancement in the crop vegetation and health. The fact that it is a natural product, with very little or no environmental impact, being safe for users, the environment and consumers as previously mentioned must further be pointed out.

In summary, the advantages of the composition as used in the invention are as follows:
- It is a natural product
- It enhances the general crop quality
- It confers resistance to both abiotic and biotic stress
- It has a mode of action based on an elicitor effect
- Damage caused by pathogens is unfeasible as a result of its activity
- It is a safe product for users
- It is a safe product for the environment
- It is a safe product for end consumers
- It has very little or no residue problem

Therefore, in another aspect the invention provides a method for inducing a response to biotic stress in plants fit to be cultivated which comprises applying the composition described above to such plants by means of fertigation or foliar spraying. In a particular embodiment, the invention provides a method for preventing or reducing damage caused by pathogens in plants fit to be cultivated.

The composition as used in the invention allows mitigating the damage that can cause diseases induced by fungal pathogens, oomycetes and bacteria.

The composition favors catalyzation of the biosynthesis of polyphenols and phytoalexins, substances produced as a natural defense mechanism in plants that are toxic for fungi and bacteria, so it limits the spread of the pathogen. The composition therefore acts as a fungistatic, fungitoxic and bacteriostatic agent while at the same time generating self-defenses against diseases of a fungal or bacterial origin.

The invention also provides a method for inducing a response to abiotic stress in plants fit to be cultivated, which comprises applying to such plants the composition described above by means of fertigation or foliar spraying. In a particular embodiment, the invention provides a method for preventing or reducing damage caused by drought, high temperatures, low temperatures, salinity, heavy metals, ultraviolet radiations and/or soil acidity. In a preferred embodiment, the invention provides a method for preventing or reducing damage caused by drought, high temperatures and/or low temperatures.

Similarly, in another aspect of the invention, a method is provided for increasing the vigor and health in plants fit to be cultivated, characterized in that it comprises applying to such plants the composition described above by means of fertigation or foliar spraying.

The composition as used in the invention favors photosynthesis and plant tissue development, so the plants of the crops treated with said composition show a considerable increase in vigor both in relation to untreated crops and in relation to crops that are treated with conventional products. The composition can therefore be considered a strengthening product that contributes to enhancing crop vegetation, inducing defense responses to abiotic stress that translate into vigorous plants with excellent glossiness and color. More vigorous plants are furthermore less prone to suffer damage caused by pathogen infections.

The application dose as well as the time intervals between applications will be determined by the type of plant to be treated, the stress factor to be treated (for example the fungus, oomycete or the bacterium in question) and the type of application (foliar spraying or fertigation).

Finally, the composition as used in the invention is very stable and homogenous so it does not require constant stirring in the application tank nor does it present any risk of plugging up nozzles or droppers.

The following examples illustrate the invention and must not be considered as limiting the scope thereof.

### EXAMPLE I

### Preparation of a composition for use containing 2% by weight of galacturonic acid oligomers of the invention

40 g of apple food pectin were introduced in a closed stirring reactor to which 300 ml of methanol and then 20 ml of 12 M hydrochloric acid were added. The mixture was maintained under reflux at a temperature of 65°C for 24 hours. At no time was it observed that the mixture completely dissolved. The mixture was then filtered thereby separating two fractions: a soluble fraction and an insoluble fraction, which was discarded. The soluble fraction was then subjected to fractional distillation to remove the excess methanol, leaving only the oligogalacturonide fraction dissolved in aqueous medium, hereinafter AM solution.

### EXAMPLE II

### Preparation of a composition containing galacturonic acid oligomers of the invention esterified with Fe with an Fe content of 3.5% by weight

The solution of galacturonic acid oligomers was prepared as indicated in Example I. Then 19.5% by weight of Fe sulfate was added at a temperature of 25°C under stirring for 2 hours until completely dissolved. A solution of iron oligogalacturonates was thus obtained and 20% of commercially available sodium gluconate was added to it to obtain SVL-320 solution.

### EXAMPLE III

### Preparation of a composition containing galacturonic acid oligomers of the invention esterified with Mn and Zn with an Mn content of 3% by weight and Zn content of 3% by weight

The solution of galacturonic acid oligomers was prepared as indicated in Example I. Then 9.5% by weight of Mn sulfate and 13.7% by weight of Zn sulfate were added at a temperature of 25°C under stirring for 4 hours until completely dissolved. A solution of manganese and zinc oligogalacturonates was thus obtained, and 20% of commercially available sodium gluconate was added to it to obtain SVL-303 solution

### EXAMPLE 1

### Effect of the compositions obtained in Examples I and III on vegetative development and water stress in Arabidopsis thaliana and pepper plants. Toxicity study.

This study was conducted by the Plant Physiology Department of the IVIA Research Center *(Departamento de Fisiología Vegetal del Centro de Investigacíon IVIA)* of Valencia.

### Plant material:

- 1 and 2 month old *Arabidopsis thaliana* plants.
- 4.5 month old pepper plants, grown in shade house for two months and later moved to a heated area (between 18 and 25°C).

### Tests conducted:

A dose of 3 ml/I, pH= 4.5-5.0, of the tested compositions was applied by means of foliar spraying every 15 days.

For the sake of comparison, a composition of galacturonic acid oligomers esterified with Cu with a copper content of 5.5% by weight was prepared according to a method similar to that used in Examples II and III, but by using copper sulfate, and 20% of commercially available sodium gluconate was added to it to obtain SVL-081 solution.

The following compositions were therefore tested:
- AM solution,
- SVL-303 solution and
- SVL-081 solution.

Both the pepper plants and the *Arabidopsis thaliana* plants were subjected to water stress by removing irrigation. Symptoms were observed 25 days after the stress began.

The following parameters were evaluated:
- Percentage of water in the leaf (%)
- Weight of the aerial part (g)
- Plant height (cm)

### Tonicity

The appearance of the 6 week old *Arabidopsis thaliana* plants, treated every 15 days after 15 days of age with AM solution, SVL-303 solution and SVL-081 solution, was observed. The appearance of the leaves of 4.5 month old pepper plants 13 days after the previously indicated treatment with AM solution, copper sulfate pentahydrate solution (applied in doses supplying the same Cu as SVL-081), SVL-303 solution and SVL-081 solution was similarly observed.

As can be seen in Figures 1 and 2, the application of galacturonic acid oligomers of the invention esterified with Cu (SVL-081) caused foliar damage both in *Arabidopsis thaliana* plants and in pepper plants, and the copper sulfate pentahydrate solution (CuSO₄·5H₂O) caused a less growth of the plant and less glossiness in the leaves. However, neither the application of galacturonic acid oligomers of the invention (AM), nor the application of galacturonic acid oligomers of the invention esterified with Zn/Mn (SVL-303) showed foliar damage.

### Effect on vegetative development

### Height

Height was measured and the appearance of 4.5 month old pepper plants, treated every 15 days after 21 days of age with AM solution, SVL-303 solution and SVL-081 solution, was observed. The dashed line marks a height of 34 cm.

As can be seen in Figure 3, treatment with galacturonic acid oligomers of the invention (AM) stimulated plant growth to a greater extent, giving rise to taller plants. The order of treatments in relation to an effect of taller or shorter plants was:
AM > SVL-303 > SVL-081.

### Biomass

The weight of 4.5 month old pepper plants, treated every 15 days after 21 days of age with AM solution, SVL-303 solution and SVL-081 solution, was measured.

As can be seen in Figure 4 (N=1), even though large differences in the height of the plants treated with galacturonic acid oligomers of the invention (AM) and with galacturonic acid oligomers of the invention esterified with Zn/Mn (SVL-303) had been observed, significant differences in the weight of the aerial part of the treated plants were not observed.

### Effect on water stress

The percentage of water loss in leaves of 4.5 month old pepper plants, treated every 15 days after 21 days of age with AM solution, SVL-303 solution and SVL-081 solution, was measured.

As can be seen in Figure 5 (N= 10), the plants treated with galacturonic acid oligomers of the invention (AM) and with galacturonic acid oligomers of the invention esterified with Zn/Mn (SVL-303) better withstand water stress due to acclimation.

However, the composition of galacturonic acid oligomers of the invention esterified with copper (SVL-081) showed negative synergy.

The order of more to fewer stress symptoms, quantified as percentage of water loss in leaves, was as follows: SVL-081 >SVL-303=AM.

The most stressed plants mature sooner. Plants treated with SVL-081 had ripe (red) peppers, whereas plants treated with AM and SVL-303 had flowers and/or small unripe fruits.

It can therefore be concluded that the composition of the invention favors the increase of resistance to water stress (abiotic stress).

### EXAMPLE 2

### Evaluation of the effects of the composition obtained in Examples II and III on the tomato crop

The test was conducted by the company SICOP, which is officially recognized by the Spanish Agricultural Ministry as being competent in conducting Officially Recognized Testing *(Ensayos Oficialmente Reconocidos)* (EOR 50/03) according to Royal Decree *(Real Decreto*) 2163/1994. The design of the experiments, data collection, result analysis and final report were all done according to "Good Experimental Practice". The field work was conducted primarily following "Good Agricultural Practice", according to EPPO guidelines, with some specific adjustments according to the study objectives.

### Tested compositions

A product that induces defenses against stress of the state of the art, relating to a plant strengthening microbial extract, hereinafter PSME, in the form of a wettable powder at a concentration of 108 CFU/g, was used for the sake of comparison. Likewise, the composition of galacturonic acid oligomers esterified with Cu with a copper content of 5.5% by weight of Example 1 was also used for the sake of comparison.

Therefore the following compositions were tested:
- SVL-303 solution,
- SVL-320 solution
- SVL-081 solution, and
- PSME

### Crop

Crop: Tomato
Botanical name: *Solanum lycopersicum*
Order: Solanales
Family: Solanaceae
Subfamily: Solanoideae
Genus: *Solanum*
Species: *S*. *lycopersicum*
Variety: Santa West
Type: Grafted into Maxifort
Transplant date: 15.09.12
Planting density: 1 plant/m². Pruned to three stems. Spacing between plants: 2 x 0.5 m.
Type of irrigation: Drip irrigation.
Cultivation system: Under plastic.
Planting system: Sowing in seedbed and later transplanted to final terrain.

### Materials and methods

### Conditions of the study

The test design was by means of randomly distributed plots. Four repetitions were conducted for each theory contained in the protocol, the specimen being included in the testing plots. The test was thus established in 20 independent plots each with a 12 m² surface area.

The plant material used was pear-shaped tomato cherry, Santa West variety, grafted into Maxifort. Each of the plots comprised about 12 plants pruned to three stems.

Crop fertigation was the same in all the plots.

### Greenhouse characteristics

The test was conducted in a greenhouse with a galvanized iron structure. It was a ridge and furrow-type greenhouse with a North-South orientation. The total surface area was 5840 m², with dimensions of 80 m long and 73 m wide. It had ventilation in the sides and roofs, covered with plastic. It was 4 meters high at the ridge and 3.5 meters at the gutter.

The irrigation system used in this greenhouse was drip irrigation, with 2 droppers per m² and a flow rate of 3 l/h.
Soil: Loamy.
Irrigations: The post-transplanted plants were first irrigated immediately after planting and then drip irrigated every 1-2 days.
Manual labor: None. Minor manual hoeing to remove weeds.
Fertilizer: Inputs of N, P₂O₅ and K₂O by means of fertigation for the cultivation cycle in all irrigations. Microelement inputs through the irrigation water.
Water: Irrigation water analysis

| DETERMINATIONS | RESULTS | |
|---|---|---|
| pH (20°C) | 7.80 | |
| Conductivity (ms/cm) | 0.50 | |

| | MEQ/L | MG/L |
|---|---|---|
| Potassium | 0.07 | 2.74 |
| Sodium | 1.05 | 24.15 |
| Calcium | 2.51 | 50.30 |
| Magnesium | 1.78 | 21.64 |
| Sulfates | 1.42 | 68.16 |
| Chlorides | 1.11 | 39.41 |
| Nitrates | 0.06 | 3.72 |
| Bicarbonates | 2.62 | 159.82 |
| Carbonates | 0.00 | 0.00 |
| S.A.R. | 0.72 | |

### Maintenance

No maintenance applications were applied in the testing plots.

**Tested treatments**

| | Product | Dose |
|---|---|---|
| Specimen 1 (T1) | - | - |
| Specimen 2 (T2) | SVL-081 | 300 ml/100 l |
| Specimen 3 (T3) | SVL-303 | 300 ml/100 l |
| Specimen 4 (T4) | SVL-320 | 300 ml/100 l |
| Specimen 5 (T5) | PSME | 200 g/100 l |

### Applications

A total of 3 foliar applications were made. The same machinery was used in all the applications. The type of machine used was a MARUYAMA motorized backpack sprayer with a working pressure of 5 atmospheres. The broth volume used in the first application was 750 l/ha, in the second application it was 800 l/ha and in the third application it was 875 l/ha.

### Application methodology

Specifically two types of activity were evaluated:
- The response of the crop to the effect which induces resistance to abiotic stress, particularly the tolerance to cold weather.
- The response of the crop to biotic stress caused by the pathogen *Phytophthora infestans,* particularly the number of leaves infected, the number of plants infected per plot and the number of plants killed per plot.

### Conducting the test

When beginning the test, a planning that describes the actions to be performed at all times according to protocol is established:

| Date | Action |
|---|---|
| 17/12/2012 | Prior evaluation and 1^{st} application |
| 24/12/2012 | Evaluation 7 days after the first application (7DA1A) and 7 days after the second application (7DA2A) |
| 31/12/2012 | Evaluation 7 days after the second application (7DA2A) and 7 days after the third application (7DA3A) |
| 07/01/2013 | Evaluation 7 days after the third application (7DA3A) |
| 14/01/2013 | Evaluation 14 days after the third application (14DA3A) |

The test was established in an important tomato crop area where the disease occurs naturally for the cultivation cycle in which the test was conducted.

According to the protocol guidelines, the test was preventively started on December 17. On this date the crop was between states 67 and 72 of the BBCH scale (7 or more inflorescences with flowers open up to the 2^{nd} fruit cluster with the 1^{st} fruit reaching typical size). The second application was made on December 24, the crop being between states 67 and 74 of the BBCH scale (7 or more inflorescences with flowers open up to the 4^{th} fruit cluster with the 1^{st} fruit reaching typical size). The third application was made on December 31, the crop between states 72 and 79 of the BBCH scale (2^{nd} fruit cluster with the 1^{st} fruit reaching typical size up to 9 or more fruit clusters, with fruits reaching typical size).

The onset of the disease in mid-December coincided with a damp period and temperatures that were ideal for the onset of *Phytophthora infestans*. The maintenance of the conditions that were ideal for the disease gave rise to a slow progression in the specimen that enabled correctly conducting the test, being able to compare the effect of the products with respect to the specimen.

### Results

### 1- Tolerance to cold weather

With respect to the color of the leaves, a difference in the specimen with the treated plots (purple leaves with less glossiness) was observed after 14 days of the last application, so another evaluation was made 21 days after the 3^{rd} application.

Table 1 shows the mean of plants affected per plot.

**Table 1 - Mean percentage of tomato plants affected by cold weather subjected to treatment with the different tested solutions**

| | 14DA3A | 21DA3A |
|---|---|---|
| T1-Specimen | 37.50 | 43.75 |
| T2-SVL-081 | 16.25 | 20.00 |
| T3-SVL303 | 13.75 | 17.50 |
| T4-SVL-320 | 17.50 | 18.75 |
| T5-PSME | 18.75 | 22.50 |

Figure 6 shows these results, where it can be seen that the treatment with galacturonic acid oligomers of the invention esterified with Zn/Mn (T3-SVL-303) has a clear effect on the leaves, where more glossiness and a darker green are seen, followed by the treatment with galacturonic acid oligomers of the invention esterified with Fe (T4-SVL-320).

It can also be seen that the specimen has purple color leaves with less glossiness and that the plant strengthening microbial extract (T5-PSME) is the treatment that behaves the worst compared to the other three.

Table 2 shows the percentages of plants affected by cold weather, measured with respect to the specimen.

**Table 2 - Percentage of tomato plants affected by cold weather subjected to treatment with the different tested solutions with respect to the specimen**

| | 14DA3A | 21DA3A |
|---|---|---|
| T2-SVL-081 | 56.67 | 54.29 |
| T3-SVL303 | 63.33 | 60.00 |
| T4-SVL-320 | 53.33 | 57.14 |
| T5-PSME | 50.00 | 48.57 |

Figure 7 shows these results, where it can be seen that the treatment with galacturonic acid oligomers of the invention esterified with Zn/Mn (T3-SVL-303) gives the plant greater tolerance to cold weather because the color of the leaves has a more intense glossiness and fewer purple tones. The treatment with galacturonic acid oligomers of the invention esterified with Fe (T4-SVL-320) also makes the plant more resistant to cold weather, behaving in a manner that is very similar to T3-SVL-303. Therefore, said compositions promoted resistance responses in the plants, especially the first of them.

### 2- Number of leaves infected with the pathogen

Table 3 shows the evolution of the number of leaves infected per plot according to each of the treatments.

**Table 3 - Mean number of leaves infected with Phytophthora infestans in tomato plants subjected to treatment with the different tested solutions**

| | Prior ev. | 7DA1A | 7DA2A | 7DA3A | 14DA3A |
|---|---|---|---|---|---|
| T1-Specimen | 2.25 a | 11.50 a | 14.50 a | 13.25 a | 17.00 a |
| T2-SVL-081 | 0.75 a | 6.50 b | 7.75 b | 8.25 b | 10.50 b |
| T3-SVL-303 | 1.50 a | 4.75 b | 8.25 b | 7.25 b | 9.25 b |
| T4-SVL-320 | 1.25 a | 6.25 b | 6.50 b | 5.75 b | 7.25 b |
| T5-PSME | 1.00 a | 5.75 b | 8.50 b | 7.00 b | 9.00 b |

Figure 8 shows these results, where it can be seen that the most effective treatments are those in which the plants were treated with galacturonic acid oligomers of the invention esterified with Zn/Mn (T3-SVL-303) and with galacturonic acid oligomers of the invention esterified with Fe (T4-SVL-320).

### 3- Number of plants infected per plot

Table 4 shows the evolution of the number of plants infected per plot according to each of the treatments.

**Table 4 - Mean number of plants infected with Phytophthora infestans in tomato plants subjected to treatment with the different tested solutions**

| | Prior ev. | 7DA1A | 7DA2A | 7DA3A | 14DA3A |
|---|---|---|---|---|---|
| T1-Specimen | 0.00 a | 2.75 a | 3.25 a | 6.75 a | 7.50 a |
| T2-SVL-081 | 0.25 a | 1.25 a | 2.50 a | 3.75 b | 5.00 b |
| T3-SVL-303 | 0.25 a | 1.75 a | 3.00 a | 3.00 b | 4.00 b |
| T4-SVL-320 | 0.50 a | 2.50 a | 2.75 a | 2.25 b | 2.75 b |
| T5-PSME | 0.00 a | 1.50 a | 2.50 a | 2.75 b | 3.00 b |

Figures 9 and 10 show these results, where it can be seen that no statistically significant differences between the treatments and the specimen occur up to seven days after the second application because the study was started in a preventive manner. These statistically significant differences between the treatments and the specimen are maintained until the end.

The best response to the pathogen is that of the solution with galacturonic acid oligomers of the invention esterified with Fe (T4-SVL-320). The response of the plant occurred to a greater extent as the product accumulated gradually in the plant, stopping the disease. Given the field observations, this treatment prevents the fungus from penetrating the cortex, the infection remaining on the epidermis.

### 4- Number of plants killed per plot

Table 5 shows the evolution of the number of plants killed per plot according to each of the treatments.

**Table 5 - Mean number of plants killed by Phytophthora infestans in tomato plants subjected to treatment with the different tested solutions**

| | 14DA3A | 21DA3A |
|---|---|---|
| T1-Specimen | 3.50 | 5.75 |
| T2-SVL-081 | 1.75 | 3.00 |
| T3-SVL-303 | 1.75 | 2.25 |
| T4-SVL-320 | 0.75 | 1.00 |
| T5-PSME | 0.75 | 2.50 |

Figure 11 shows these results, where it can be seen that the solution with galacturonic acid oligomers of the invention esterified with Fe (T4-SVL-320) makes the plant develop a defense mechanism preventing the pathogen from penetrating and preventing it from strangling the plant, therefore causing a lower mortality rate in the plants.

It can therefore be concluded that as a response to a type of biotic stress caused by *Phytophthora infestans*, the application of the solution with galacturonic acid oligomers of the invention esterified with Fe (T4-SVL-320) shows a completely novel mode of action with respect to conventional fungicides. It is observed that the plant develops a defense mechanism as a response to the action of the product, preventing the pathogen from penetrating the cortex, the infection being limited to the epidermis, not being able to spread. The effect of the treatment is cumulative.

As for the activation of physiological responses, the treatment with galacturonic acid oligomers of the invention esterified with Fe (T4-SVL-320) is the treatment that showed the highest increase in the biomass of the treated plants. All the treatments had an effect on the increase in crop vigor in relation to the specimen. The standard relating to the plant strengthening microbial extract (T5-PSME) behaved in a worse manner than the remaining treatments.

## Claims

1. Use of a composition comprising a mixture of galacturonic acid oligomers esterified with a soluble salt of transition metal selected from Zn, Mn, Fe, Mo, Co and mixtures thereof,as an active ingredient, wherein the number of galacturonic acid units ranges between 1 and 10, as an agrochemical.

2. Use according to claim 1, wherein the number of galacturonic acid molecules ranges between 1 and 4.

3. Use of according to claim 1, **characterized in that** it comprises 0.1-10% by weight of active ingredient with respect to the total weight of the composition.

4. Use according to claim 3, **characterized in that** it comprises 2% by weight of active ingredient with respect to the total weight of the composition.

5. Use according to claim 1, **characterized in that** it comprises 0.1-20% by weight of metal with respect to the total weight of the composition.

6. Use according to claim 5, **characterized in that** it comprises 2-8% by weight of metal with respect to the total weight of the composition.

7. Method for the preparation of the agrochemical composition as used in claim 1, **characterized in that** it comprises the steps of:
(a) dissolving 10-25% by weight of pectin with respect to the total weight of the final composition in a lower alcohol at a temperature of 55-70°C and adding 1-5% by volume of a strong acid with respect to the total volume of the final composition;
(b) filtering the solution obtained in step (a) to separate a liquid fraction and a solid residue;
(c) subjecting the liquid fraction obtained in step (b) to fractional distillation to obtain a solution of galacturonic acid oligomers wherein the number of galacturonic acid units ranges between 1 and 10, and
(d) adding a soluble salt of the transition metal selected from Zn, Mn, Fe, Mo, Co and mixtures thereof to the solution obtained in step (c).

8. Method according to claim 7, **characterized in that** in step (a) 14% by weight of pectin with respect to the total weight of the final composition is dissolved in methanol at a temperature of 65°C, and 1.9% by volume of hydrochloric acid with respect to the total volume of the final composition is added.

9. Method for inducing a response to biotic stress in plants fit to be cultivated, **characterized in that** it comprises applying to such plants the agrochemical composition as used in claims 1-6 by means of fertigation or foliar spraying.

10. Method according to claim 9 for preventing or reducing damage caused by pathogens in plants fit to be cultivated.

11. Method for inducing a response to abiotic stress in plants fit to be cultivated, **characterized in that** it comprises applying to such plants the agrochemical composition as used in claims 1-6 by means of fertigation or foliar spraying.

12. Method according to claim 11 for preventing or reducing damage caused by drought, high temperatures and low temperatures.

## Patentansprüche

1. Verwendung einer Zusammensetzung, umfassend eine Mischung aus Galacturonsäureoligomeren, verestert mit einem löslichen Salz eines Übergangsmetalls, ausgewählt aus Zn, Mn, Fe, Mo, Co und deren Mischungen, als ein aktiver Bestandteil, worin die Anzahl von Galacturonsäureeinheiten von 1 bis 10 reicht, als Agrochemikalie.

2. Verwendung gemäß Anspruch 1, worin die Anzahl der Galacturonsäuremoleküle von 1 bis 4 reicht.

3. Verwendung gemäß Anspruch 1, **dadurch gekennzeichnet, dass** sie 0,1 - 10 Gewichts-% aktiven Bestandteil, bezogen auf das Gesamtgewicht der Zusammensetzung, umfasst.

4. Verwendung gemäß Anspruch 3, **dadurch gekennzeichnet, dass** sie 2 Gewichts-% aktiven Bestandteil, bezogen auf das Gesamtgewicht der Zusammensetzung, umfasst.

5. Verwendung gemäß Anspruch 1, **dadurch gekennzeichnet, dass** sie 0,1 - 20 Gewichts-% Metall, bezogen auf das Gesamtgewicht der Zusammensetzung, umfasst.

6. Verwendung gemäß Anspruch 5, **dadurch gekennzeichnet, dass** sie 2 - 8 Gewichts-% Metall, bezogen auf das Gesamtgewicht der Zusammensetzung, umfasst.

7. Verfahren zur Herstellung der agrochemischen Zusammensetzung, wie sie in Anspruch 1 verwendet wird, **dadurch gekennzeichnet, dass** sie die folgenden Schritte umfasst:
(a) Lösen von 10 - 25 Gewichts-% Pektin, bezogen auf das Gesamtgewicht der Endzusammensetzung, in einem niedrigen Alkohol bei einer Temperatur von 55 - 70 °C und Hinzufügen von 1 - 5 Volumen-% einer starken Säure in Bezug auf das Gesamtvolumen der Endzusammensetzung;
(b) Filtrieren der Lösung, die in Schritt (a) erhalten wurde, um eine flüssige Fraktion und einen festen Rückstand zu erhalten;
(c) Unterziehen der in Schritt (b) erhaltenen flüssigen Fraktion einer fraktionierten Destillation, um eine Lösung von Galacturonsäureoligomeren zu erhalten, worin die Anzahl der Galacturonsäureeinheiten von 1 bis 10 reicht, und
(d) Hinzufügen eines löslichen Salzes des Übergangsmetalls, ausgewählt aus Zn, Mn, Fe, Mo, Co und deren Mischungen zu der in Schritt (c) erhaltenen Lösung.

8. Verfahren, gemäß Anspruch 7, **dadurch gekennzeichnet, dass** in Schritt (a) 14 Gewichts-% Pektin, bezogen auf das Gesamtgewicht der Endzusammensetzung, in Methanol bei einer Temperatur von 65 °C gelöst werden, und 1,9 Volumen-% Salzsäure, bezogen auf das Gesamtvolumen der Endzusammensetzung, hinzugefügt werden.

9. Verfahren zum Induzieren einer Antwort auf biotischen Stress bei zur Kultivierung geeigneten Pflanzen, **dadurch gekennzeichnet, dass** es das Anwenden der agrochemischen Zusammensetzung, wie sie in den Ansprüchen 1 - 6 verwendet wird, auf diese Pflanzen mittels Fertigation oder Blattsprühung umfasst.

10. Verfahren gemäß Anspruch 9, zum Verhindern oder Reduzieren von Schaden, der durch Pathogene bei zur Kultivierung geeigneten Pflanzen verursacht wird.

11. Verfahren zum Induzieren einer Antwort auf abiotischen Stress bei Pflanzen, die zur Kultivierung geeignet sind, **dadurch gekennzeichnet, dass** es das Anwenden der agrochemischen Zusammensetzung, wie sie in den Ansprüchen 1 - 6 verwendet wird, auf diese Pflanzen mittels Fertigation oder Blattsprühung umfasst.

12. Verfahren gemäß Anspruch 11, zum Verhindern oder Reduzieren von Schaden, der durch Dürre, hohe Temperaturen und niedrige Temperaturen verursacht wird.

## Revendications

1. Utilisation d'une composition comprenant un mélange d'oligomères d'acide galacturonique estérifiés avec un sel soluble d'un métal de transition choisi parmi Zn, Mn, Fe, Mo, Co et leurs mélanges, comme principe actif, dans lequel le nombre d'unités d'acide galacturonique est entre 1 et 10, comme produit agrochimique.

2. Utilisation selon la revendication 1, dans laquelle le nombre de molécules d'acide galacturonique est entre 1 et 4.

3. Utilisation selon la revendication 1, **caractérisée en ce qu'**elle comprend 0.1-10% en poids d'ingrédient actif par rapport au poids total de la composition.

4. Utilisation selon la revendication 3, **caractérisée en ce qu'**elle comprend 2% en poids d'ingrédient actif par rapport au poids total de la composition.

5. Utilisation selon la revendication 1, **caractérisée en ce qu'**elle comprend 0.1-20% en poids de métal par rapport au poids total de la composition.

6. Utilisation selon la revendication 5, **caractérisée en ce qu'**elle comprend 2-8% en poids de métal par rapport au poids total de la composition.

7. Méthode pour la préparation de la composition agrochimique comme utilisée dans la revendication 1, **caractérisée en ce qu'**elle comprend les étapes de :
a) Dissolution de 10-25% en poids de pectine par rapport au poids total de la composition finale dans un alcool inférieur à une température de 55-70°C et ajout de 1-5% en volume d'un acide fort par rapport au volume total de la composition finale ;
b) Filtration de la solution obtenue à l'étape a) pour séparer une fraction liquide et un résidu solide ;
c) Soumission de la fraction liquide obtenue à l'étape b) à une distillation fractionnée pour obtenir une solution d'oligomères d'acide galacturonique dans laquelle le nombre d'unités d'acide galacturonique est entre 1 et 10, et
d) Ajout d'un sel soluble à métal de transition choisi parmi Zn, Mn, Fe, Mo, Co et leurs mélanges à la solution obtenue à l'étape c).

8. Méthode selon la revendication 7, **caractérisée en ce que** dans l'étape a) 14% en poids de pectine par rapport au poids total de la composition finale est dissout dans du méthanol à une température de 65°C, et 1,9% du volume d'acide hydrochlorique par rapport au volume total de la composition finale est ajouté.

9. Méthode pour l'induction d'une réponse au stress biotique dans les plantes aptes à être cultivées, **caractérisée en ce qu'**elle comprend une application sur les susdites plantes d'une composition agrochimique comme utilisée dans les revendications 1-6 au moyen de fertilisation ou de pulvérisation foliaire.

10. Méthode selon la revendication 9 pour prévenir ou réduire les dommages causés par les pathogènes dans les plantes aptes à être cultivées.

11. Méthode pour induire une réponse à un stress abiotique dans les plantes aptes à être cultivées, **caractérisée en ce qu'**elle comprend une application sur les susdites plantes d'une composition agrochimique comme utilisée dans les revendications 1-6 au moyen de fertilisation ou de pulvérisation foliaire.

12. Méthode selon la revendication 11 pour prévenir ou réduire les dommages causés par la sécheresse, les fortes températures et les faibles températures.
